# EUROPEAN PATENT SPECIFICATION

(11) **EP 2 862 738 B1**
(45) Date of publication and mention of the grant of the patent: **26.07.2017**
(21) Application number: 13188782.0
(22) Date of filing: 15.10.2013
(51) Int. Cl.: B60J 3/02

(54) **Electric-powered sun visor for vehicle**
Elektrisch betriebene Sonnenblende für Fahrzeuge
Pare-soleil pour véhicule électrique

(43) Date of publication of application: 22.04.2015
(73) Proprietor: Seoyon Intech Co., Ltd., Jeollabuk-Do 570-998 (KR)
(72) Inventor: Seo, Joong Seok, 570-998 Iksan-City, Jeollabuk-Do (KR)
(74) Representative: Müller & Schubert

(56) References cited:
- DE-A1- 19 640 846
- US-A- 5 468 040
- US-A1- 2010 060 028

## Description

### TECHNICAL FIELD

The present invention relates to an electric-powered sun visor for a vehicle that is developed or returned from/to the outside of the front surface glass or the rear surface glass at the interior of the vehicle in an electrically powered manner so as to prevent a driver's or passenger's field of vision from being interrupted by the sunlight entering a driver seat or a passenger seat, and more specifically, to an electric-powered sun visor for a vehicle that is provided with a power transmitting part wherein an output shaft of an actuator is connected to a rink case through a gear wire to transmit power to a movement inducing part through the rotation of the gear wire, a helical screw as the movement inducing part, slide gears as horizontal distance moving parts, linkages as folding parts, a screen roll as a tension maintaining part, a screen part, a mounting frame, and base covers, whereby the vibration of the actuator and the occurrence of shaking caused by the assembly gap of the actuator can be prevented, the power generated from the actuator is transmitted gently to the helical screw to allow a shading screen of the electric-powered sun visor to be accurately developed and returned, the electric-powered sun visor can be developed to long width to increase the shading area, the generation of noise when the electric-powered sun visor is developed or returned can be minimized, the movements of the developed shading screen can be prevented, the balance of the force of developing or returning the electric-powered sun visor can be uniformly maintained, the sagging and wrinkling of the shading screen can be prevented, it is easy to be mounted on the vehicle to improve the mounting operation, the outer appearance of the electric-powered sun visor can be improved when the electric-powered sun visor is mounted, and the driver's or passenger's field of vision can be protected from the sunlight to ensure excellent vision and safe driving.

### Background Art

In conventional practices, a sun visor for a vehicle is mounted above the front surface glass in front of a driver seat or a passenger seat in the vehicle so as to prevent a driver's or passenger's field of vision from being interrupted by the sunlight entering the driver seat or the passenger seat, and the conventional sun visor generally includes a body made of a synthetic resin material and serving as a shading plate having an extremely limited area and a folder fastened to the body to allow the body to be moved in up and down or left and right directions by means of the manipulation of the driver or the passenger, thereby preventing the sunlight from entering his or her field of vision.

US 2010/060028 A1 discloses an automobile sun visor with an electromechanical sun shade device. Further, the electromechanical sun shade device comprises an elongated housing, a screening, a support frame and operational mechanism. The support frame is defined by a scissor-type extension mechanism with interdependent, multi-stage frame support layers that evenly and supportively extend and adjust to a plurality of lengths. Each stage is X-shaped with crossing arms and central pivot point.

### Disclosure of Invention

### Technical Problem

In the conventional sun visor for a vehicle, however, the body has to be moved in up and down or left and right directions by means of the direct manipulation of the driver or the passenger so as to prevent the sunlight from entering his or her field of vision, which undesirably does not ensure safe driving.

Further, the shading area on which the sunlight is blocked is extremely restricted by means of the body having extremely limited area, which undesirably makes the sunlight enter the outside of the body, decreases the shading efficiency, and thus makes it inconvenient in use.

If the body of the sun visor has a relatively large area in width so as to ensure the shading area, it may obstruct the driver's or passenger's field of vision in front of the driver seat or the passenger seat, which does not ensure his or her field of vision, causes many problems in safe driving, and thus makes him or her feel uncomfortable.

So as to solve the above-mentioned problems, thus, an electric-powered sun visor has been proposed and used wherein a screen or a frame to which the screen is coupled is folded by using a motor and a gear as an electric device and thus the screen is wound or developed. In case of the conventional electric-powered sun visor, however, when the screen or the frame to which the screen is coupled is folded, the folding is not gently performed, and further, the frames constituting the electric-powered sun visors collide against each other upon the folding, which undesirably causes a portion of the frame to be destructed and thus makes it hard to use.

Especially, when the power from the motor as a power transmission device is transmitted to the gear, the noise from the motor may be generated due to the vibration of the motor and the shaking of the motor caused by the assembly gap of the motor, and further, the gear connected to the motor is moved, so that the power is not transmitted gently to the folded frame and the folding operation of the frame is not performed well. Moreover, the developing and returning operations of the screen coupled to the folded frame are not easily performed to obstruct the driver's or passenger's field of vision due to the sunlight entering the driver seat or the passenger seat.

Further, during the folding, the screen may be torn out, and during the winding of the screen, the screen may be not returned well, which does not ensure the driver's or passenger's field of vision. On the other hand, the conventional electric-powered sun visor is limited in the developed length below 200mm, which makes it hard to further extend the shading area, and noise occurs when the conventional electric-powered sun visor is developed or returned.

Further, the movements of the screen as the shading screen may occur, and the balance of the force of developing or returning the conventional electric-powered sun visor is not uniformly maintained. Moreover, the screen as the shading screen may sag or wrinkle, and it is not easy for the conventional electric-powered sun visor to be mounted on the vehicle, which decreases the efficiency of the mounting operation. When mounted on the vehicle, further, the conventional electric-powered sun visor does not have good outer appearance.

### Technical Solution

The present invention provides an electric-powered sun visor for a vehicle that is provided with a power transmitting part wherein an output shaft of an actuator is connected to a rink case through a gear wire to transmit power to a movement inducing part through the rotation of the gear wire, a helical screw as the movement inducing part, slide gears as horizontal distance moving parts, linkages as folding parts, a screen roll as a tension maintaining part, a screen part, a mounting frame, and base covers, whereby the vibration of the actuator and the occurrence of shaking caused by the assembly gap of the actuator can be prevented, the power generated from the actuator is transmitted gently to the helical screw to allow a shading screen of the electric-powered sun visor to be accurately developed and returned, the electric-powered sun visor can be developed to long width to increase the shading area, the generation of noise when the electric-powered sun visor is developed or returned can be minimized, the movements of the developed shading screen can be prevented, the balance of the force of developing or returning the electric-powered sun visor can be uniformly maintained, the sagging and wrinkling of the shading screen can be prevented, it is easy to be mounted on the vehicle to improve the mounting operation, the outer appearance of the electric-powered sun visor can be improved when the electric-powered sun visor is mounted, and the driver's or passenger's field of vision can be protected from the sunlight to ensure excellent vision and safe driving.

### BRIEF DESCRIPTION OF THE DRAWINGS

The invention will be understood more fully, while still further objects and advantages will become apparent, in the following detailed description of preferred embodiments of the invention illustrated in the accompanying drawing, in which:
Fig. 1 is an exploded perspective view showing an electric-powered sun visor for a vehicle according to the present invention;
Fig. 2 is an enlarged perspective view showing a portion of the electric-powered sun visor for a vehicle according to the present invention;
Fig. 3 is an exemplary view showing the use state of the electric-powered sun visor for a vehicle according to the present invention;
Figs. 4 and 5 are perspective views showing the dissembling and assembling states of a tension maintaining part of the electric-powered sun visor for a vehicle according to the present invention;
Figs. 6 and 7 are perspective views showing the developed state of the electric-powered sun visor for a vehicle according to the present invention and the states of the parts therein; and
Fig. 8 is a perspective view showing the returned state of the electric-powered sun visor for a vehicle according to the present invention.

### Best Mode for Carrying Out the Invention

Hereinafter, an explanation on an electric-powered sun visor for a vehicle according to the present invention will be in detail given with reference to the attached drawing.

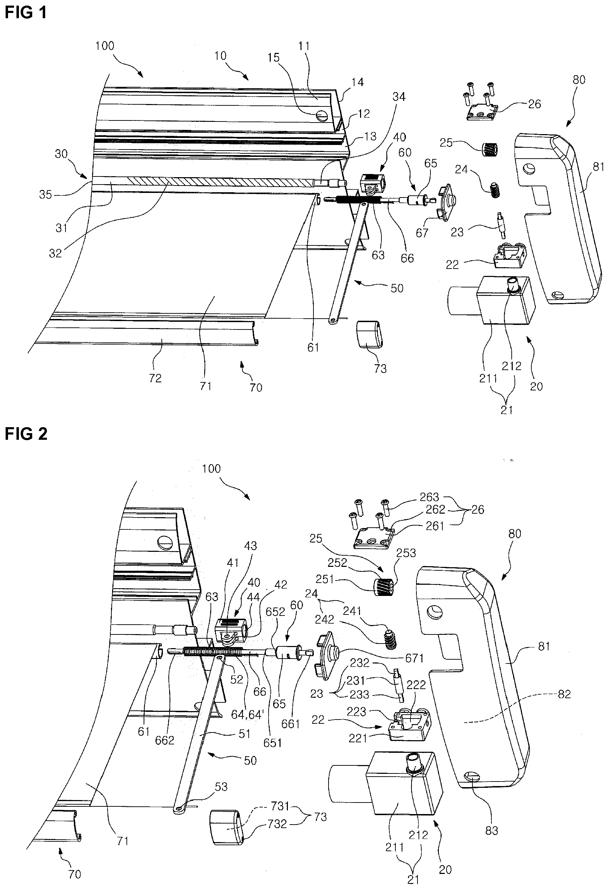

As shown in Figs. 1 and 2, the present invention relates to an electric-powered sun visor for a vehicle that is mounted at a vehicle frame disposed above the front surface glass or the rear surface glass at the interior of the vehicle in such a manner as to allow a shading screen to be developed or returned in an electrically powered manner, thereby preventing a driver's or passenger's field of vision from being interrupted by the sunlight entering a driver seat or a passenger seat.

An electric-powered sun visor 100 for a vehicle according to the present invention includes: a mounting frame 10 adapted to mount parts 20 to 80 as will be discussed later thereon and fixed to the vehicle; the power transmitting part 20 having an actuator 21 mounted on one side surface of the mounting frame 10, from which power is transmitted, a rink case 22 mounted on the top portion of the actuator 21 and having a gear wire 23, a worm gear 24 and a helical gear 25 mounted thereinto, and a rink case cover 26; the movement inducing part 30 mounted into a first mounting hole 12 of the mounting frame 10 and formed of a helical screw rotated together with the rotation of the gear wire 23, the worm gear 24 and the helical gear 25 of the power transmitting part 20; the horizontal distance moving parts 40 each mounted onto the outside of the movement inducing part 30 and formed of a slide gear moved forward and backward in a horizontal direction by means of the rotation of the movement inducing part 30 as the helical screw; the folding parts 50 each serving as a linkage fastened to each horizontal distance moving part 40 and the screen part 70 and folded to the inside and outside of the mounting frame 10 through the horizontal distance movement of each horizontal distance moving part 40; the tension maintaining part 60 serving as a screen roll mounted into a second mounting hole 13 of the mounting frame 10 and adapted to maintain the tension upon the development and return of a shading screen 71, the tension maintaining part 60 having a body 61, a spring 63, first and second noise preventing tubes 64 and 64', a spring cap 65, a fastening bar 66 and spring roll caps 67; the screen part 70 adapted to be wound on the outer peripheral surface of the body 61 of the tension maintaining part 60 and having the shading screen 71 returned or developed to/from the inside and outside of the body 61, a support bar 72, and support bar covers 73; and the base covers 80 coupled to both side surfaces of the mounting frame 10 to prevent each part from being escaped to the outside and to improve the outer appearance of the sun visor, characterized in that each folding part 50 as the linkage includes: a body 51 fastened to the slide gear as the horizontal distance moving part 40 and the support bar cover 73 of the screen part 70 in such a manner as to be folded to the inside and outside of the mounting frame 10 in accordance with the forward and backward movements of the horizontal distance of the slide gear 40; a first fastening hole 52 formed on the upper portion of the body 51 to fasten the linkage fastening holes 43 of the slide gear 40 thereto; and a second fastening hole 53 formed on the lower portion of the body 51 to fasten a linkage fastening hole 731 of the support bar cover 73 thereto.

According to the present invention, under the above-mentioned structure, the number of electric-powered sun visors 100 for a vehicle is plural, and they are fixedly mounted at the vehicle frame disposed above the front surface glass or the rear surface glass in front of or behind a driver seat or a passenger seat at the interior of the vehicle. Hereinafter, an explanation on each part will be given with respect to one electric-powered sun visor 100.

Of course, the plurality of electric-powered sun visors 100 for a vehicle according to the present invention having the same structure as each other may be fixedly mounted at the vehicle frame disposed above the front surface glass or the rear surface glass in front of or behind a driver seat or a passenger seat at the interior of the vehicle.

The mounting frame 10 includes: a body 11 made of a metal or synthetic resin material and adapted to mount the parts 20 to 80 thereon in such a manner as to be fixed to the vehicle frame disposed above the front surface glass or the rear surface glass in front of or behind the driver seat or the passenger seat at the interior of the vehicle; the first mounting hole 12 formed on one side surface of the body 11, into which the movement inducing part 30 formed of the helical gear is insertedly mounted; the second mounting hole 13 formed on the side surface of the first mounting hole 12, into which the screen roll body 61 of the tension maintaining part 60 is insertedly mounted; a layer formed on the side surface of the second mounting hole 13 to insertingly lay a front surface portion of a body 211 of the actuator 21 of the power transmitting part 20 thereon; cover mounting holes 14 formed on both side surfaces of the body 11 to mount the base covers 80 thereon; and fixing holes 15 formed on both side surfaces of the underside of the body 11 to allow the body 11 and each base cover body 71 to be fixed by means of fasteners to the vehicle frame disposed above the front surface glass or the rear surface glass in front of or behind the driver seat or the passenger seat at the interior of the vehicle.

The power transmitting part 20 includes: the actuator 21 mounted on one side surface of the mounting frame 10 and having a motor mounted at the inside of the body 211 thereof to generate power from an output shaft of the motor through the driving of the motor by the application of power thereto; the rink case 22 mounted on the top portion of the actuator 21 and serving as a gear box in which the gear wire 23, the worm gear 24 and the helical gear 25 are mounted located in a space portion 224 formed inside the body 221; the gear wire 23 mounted at the inside of the body 221 of the rink case 22 and having an actuator fastener 233 fastened to the output side of the actuator 21 to transmit the power generated through the rotation of a body 231 to the worm gear 24; the worm gear 24 fastened to the gear wire 23 and rotated together with the gear wire 23 to transmit the power to the helical gear 25; and the helical gear 25 fastened to the outside of the worm gear 24 and rotated together with the worm gear 24 to transmit the power to the helical screw as the movement inducting part 30.

The gear wire 23, the worm gear 24 and the helical gear 25 are insertedly mounted in the space portion 224 of the body 221 of the rink case 22, and after that, the rink case cover 26 is fastened to the top portion of the body 221 of the rink case 22. The front surface portion of the body 211 of the actuator 21 is laid on the layer of the mounting frame 10, and the rear surface portion of the body 211 is inserted into an insertion hole 82 of the base cover 80. Accordingly, the worm gear 24 insertedly mounted into the space portion 224 of the body 221 of the rink case 22 has a screw line 242 fastened to the outside of a screw line 252 of the helical gear 25, at the same height as the helical gear 25 fastened to one side surface of the helical screw 30 mounted into the first mounting hole 12 of the mounting frame 10 and inserted into a helical gear insertion hole 223 formed on the other side surface of the body 221 of the rink base 22, so that the helical gear 25 is rotated by the rotation of the worm gear 24 to transmit the power to the helical screw 30.

The power generated from the actuator 21 is not transmitted directly to the helical screw 30, but it is transmitted to the helical screw 30 through the gear wire 23, the worm gear 24, and the helical gear 25, which minimizes the vibration of the actuator 21 and prevents the occurrence of shaking caused by the assembly gap of the actuator 21. Further, the power generated from the actuator 21 is transmitted gently to the helical screw 30, which allows the shading screen 71 of the electric-powered sun visor 100 to be accurately developed and returned. Through the driving of the motor mounted inside the body 211 of the actuator 21, the noise during the driving of the actuator 21 can be substantially reduced.

The actuator 21 includes: the body 211 mounted on one side surface of the mounting frame 10 to generate power from the output shaft of the motor mounted therein through the driving of the motor by the application of power thereto; and a gear wire fastening hole 212 formed on the top portion of the body 211 to insert the actuator fastener 233 of the gear wire 23 thereinto, whereby the front surface portion of the body 211 is laid on the layer of the mounting frame 10 and the actuator fastener 233 of the gear wire 23 is fastened to the gear wire fastening hole 212 formed on the rear surface portion 214 of the body 211. Next, the rear surface portion 214 of the body 211 is inserted into the insertion hole 82 formed in the space of the interior of the base cover 80, so that when the mounting frame 10 and the base cover 80 are coupledly fixed to the vehicle, the movements of the body 211 can be prevented and the escape of the body 211 to the outside can be avoided.

The rink case 22 includes: the body 221 having the gear wire 23, the worm gear 24 and the helical gear 25 mounted at the inside thereof and mounted on the outside of the gear wire fastening hole 212 of the actuator 21; the space portion 224 formed at the inside of the body 221 to insert the gear wire 23, the worm gear 24 and the helical gear 25 thereinto; a gear wire through-hole 222 formed on the center of the lower portion of the body 221 to pass the actuator fastener 233 of the gear wire 23 therethrough; the helical gear insertion hole 223 formed on the other side surface of the body 221 to insert the helical gear 25 fastened to the one side surface of the helical screw 30 thereinto; and fastening holes 225 formed on the top portion of the body 221 and fastened to fastening holes 262 formed on the rink case cover 26 by means of bolts 263, whereby the gear wire 23, the worm gear 24 and the helical gear 25 are inserted into the body 221, and the rink case cover 26 is laid on the rink case 22 in such a manner as to be fastened to the rink case 22 by means of the bolts 262.

The gear wire 23 includes: the body 231 formed of a wire fastened to the output shaft of the motor mounted in the body 211 of the actuator 21 in such a manner as to be rotated in clockwise or counterclockwise direction by the positive or negative current transmitted directly from the output shaft of the motor thereto; the actuator fastener 233 formed on the lower portion of the body 231 in such a manner as to be passed through the gear wire through-hole 222 of the rink case 22 and fastened to the output shaft of the motor mounted in the body 211 of the actuator 21; and a worm gear coupler 232 formed on the top portion of the body 231 in such a manner as to be inserted into an insertion hole 243 of the worm gear 24, whereby the body 231 is rotated by means of the power transmitted from the output shaft of the motor of the actuator 21 to transmit the power to the worm gear 24.

The worm gear 24 includes: the body 241 inserted into the worm gear coupler 232 of the gear wire 23 and rotated together with the rotation of the body 231 of the gear wire 23; the screw line 242 formed on the outer peripheral surface of the body 241 in such a manner as to be fastened correspondingly to the screw line 252 of the helical gear 25; and the insertion hole 243 formed at the lower portion of the body 241 to insert the worm gear coupler 232 of the gear wire 23 thereinto, whereby the body 241 is rotated together with the rotation of the body 231 of the gear wire 23 to transmit the power to the helical gear 25.

The helical gear 25 includes: the body 251 fastened to one side surface of a body 31 of the helical screw 30 and rotated together with the worm gear 24 outside the worm gear 24 to transmit the power to the helical screw 30; the screw line 252 formed on the outer peripheral surface of the body 251 in such a manner as to be fastened correspondingly to the screw line 242 of the worm gear 24; and helical screw fixing holes 253 formed on both side surfaces of the body 251 to fix one side surface of the body 31 of the helical screw 30 by means of a fastener thereto, whereby the body 251 is rotated together with the rotation of the body 241 of the worm gear 24 to transmit the power to the helical screw 30.

The rink case cover 26 includes: a body 261 laid coupledly to the top portion of the rink case body 221 after the gear wire 23, the worm gear 24 and the helical gear 25 are inserted into the rink case body 221; and the fastening holes 262 formed on both side surfaces of the body 261 in such a manner as to be fastened correspondingly to the fastening holes 225 formed on the top portion of the rink case body 221 by means of the bolts 263, whereby the body 261 is coupled to the outside of the rink case body 221.

The movement inducing part 30 as the helical screw includes: a body 31 mounted into the first mounting hole 12 of the mounting frame 10 and fixed on one side peripheral surface thereof to the helical screw fixing holes 253 of the helical gear 25 fastened to the outside of the worm gear 24 in such a manner as to be rotated in clockwise or counterclockwise direction by the rotation of the worm gear 24 and the helical gear 25; and the screw line 32 having an inclined surface between 15° and 45° formed on one side peripheral surface 34 of the body 31 in such a manner where a forward arranged screw line is formed or a reverse arranged screw line is formed to have the reverse inclined surface to the inclined surface of the forward arranged screw line, while the screw line 32 being formed on the other side peripheral surface 35 of the body 31 in such a manner where the reverse arranged screw line or the forward arranged screw line is formed reversely with respect to the forward arranged screw line or the reverse arranged screw line formed on one side peripheral surface 34 of the body 31.

Through the rotation of the body 31 having the forward or reverse arranged screw line 32 formed on one side peripheral surface 34 thereof in the clockwise or counterclockwise direction, the slide gear as the horizontal distance moving part 40 fastened to one side peripheral surface 34 of the body 31 is moved forward to the center 33 of the body 31 or moved backward to one side peripheral surface 34 of the body 31 in a horizontal direction thereof.

Through the rotation of the body 31 having the reverse or forward arranged screw line 32 formed on the other side peripheral surface 35 thereof in the clockwise or counterclockwise direction, the slide gear 40 as the horizontal distance moving part fastened to the other side peripheral surface 35 of the body 31 is moved forward to the center 33 of the body 31 or moved backward to the other side peripheral surface 35 of the body 31 in a horizontal direction thereof.

Each horizontal distance moving part 40 as the slide gear includes: a body 41 mounted to the outside of one side peripheral surface 34 and the other side peripheral surface 35 of the helical screw body 31 on which the forward or reverse arranged screw line 32 of the movement inducing part 30 is formed in such a manner as to be moved forward to the center 33 of the helical screw body 31 or moved backward to one side peripheral surface 34 and the other side peripheral surface 35 of the body 31 in a horizontal direction thereof through the rotation of the helical screw body 31 in the clockwise or counterclockwise direction; a fixing hole 42 defined as a space portion formed on the outside of the body 41 to fix the outer peripheral surface of the helical screw body 31 and to fasten the linkage 50 thereto; linkage fastening holes 43 formed on the top and bottom portions of the fixing hole 42; and a through-hole 44 formed on the side surface of the body 41 to pass one side peripheral surface 34 of the helical screw 30 therethrough.

For example, while the helical screw as the movement inducing part 30 is being rotated in the clockwise or counterclockwise direction, the slide gear 40 is moved forward by 217mm to the center 33 of the helical screw 30 or moved backward by 217mm to one side peripheral surface 34 and the other side peripheral surface 35 of the body 31 in the horizontal direction on the outer peripheral surface of the helical screw 30 (which means the slide gear 40 is laid on the outer peripheral surface of the helical screw 30). Of course, the forward or backward moving distance of the slide gear may be more increased than 217mm if needed.

According to the present invention each folding part 50 as the linkage includes: a body 51 fastened to the slide gear as the horizontal distance moving part 40 and the support bar cover 73 of the screen part 70 in such a manner as to be folded to the inside and outside of the mounting frame 10 in accordance with the forward and backward movements of the horizontal distance of the slide gear 40; a first fastening hole 52 formed on the upper portion of the body 51 to fasten the linkage fastening holes 43 of the slide gear 40 thereto; and a second fastening hole 53 formed on the lower portion of the body 51 to fasten a linkage fastening hole 731 of the support bar cover 73 thereto.

For example, when the slide gear 40 is moved forward by 217mm to the center 33 of the helical screw 30 in the horizontal direction on the outer peripheral surface (which means the slide gear 40 is laid on the outer peripheral surface of the helical screw 30) of the helical screw 30, the linkage 50 is rotated to 84° and thus developed to the outside of the mounting frame 10, and contrarily, when the slide gear 40 is moved backward by 217mm to one side peripheral surface 34 or the other side peripheral surface 35 of the helical screw 30 in the horizontal direction on the outer peripheral surface of the helical screw 30, the linkage 50 is rotated reversely to 84° and thus returned to the inside of the mounting frame 10.

Further, after the linkage 50 is rotated to 84° and thus developed to the outside of the mounting frame 10, it is maintained to the folded angle of 5° on one side surface of the shading screen 71 to allow the shading screen 71 to be functioned well.

According to the present invention, the linkage 50 has one single body 51, which is different from the conventional practice wherein a plurality of linkages is connected, so that the movements of the linkage 50 caused by external impacts upon the development to the outside can be fully prevented.

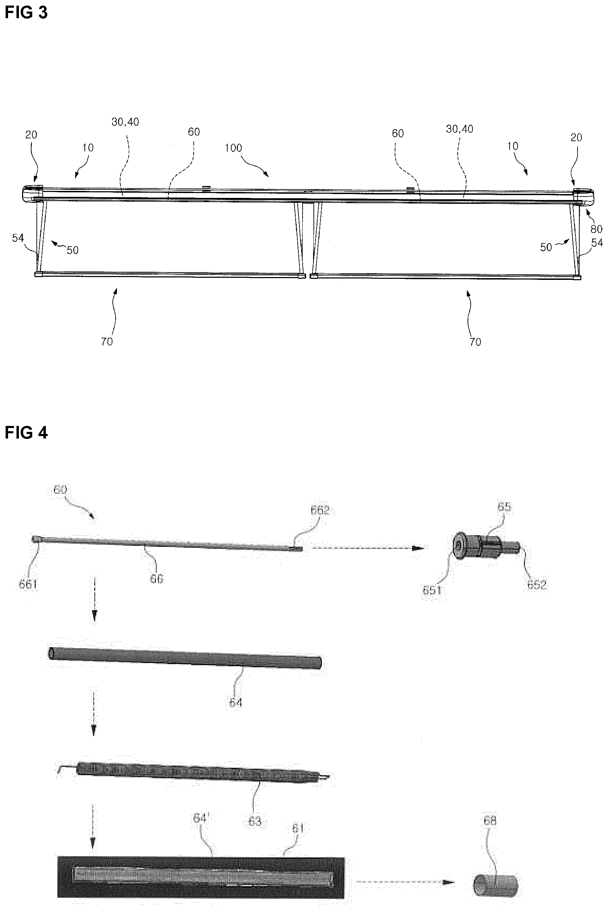

As shown in Fig.3, the power transmitting part 20, the movement inducing part 30, the horizontal distance moving parts 40 and the folding parts 50 as mentioned above and the tension maintaining part 60 and the screen part 70 as will be in detail discussed later are mounted on one side surface of the mounting frame 10 of one electric-powered sun visor 100 for a vehicle fixedly disposed above the front surface glass or the rear surface glass at the interior of the vehicle.

Accordingly, the electric-powered sun visor 100 for a vehicle according to the present invention is configured wherein the power transmitting part 20, the movement inducing part 30, the horizontal distance moving parts 40 and the folding parts 50 as mentioned above and the tension maintaining part 60 and the screen part 70 as will be in detail discussed later, which have the same configuration as those in the above, are mounted on the other side surface of the mounting frame 10 in symmetrical relation to those mounted on one side surface of the mounting frame 10.

As the power transmitting parts 20, the movement inducing parts 30, the horizontal distance moving parts 40, the folding parts 50, the tension maintaining parts 60, the fixing parts and the screen parts 70 mounted on one side surface and the other side surface of the mounting frame 10 are driven, the screen shades 71 are developed to the outside of the mounting frame 10 or returned to the inside of the mounting frame 10.

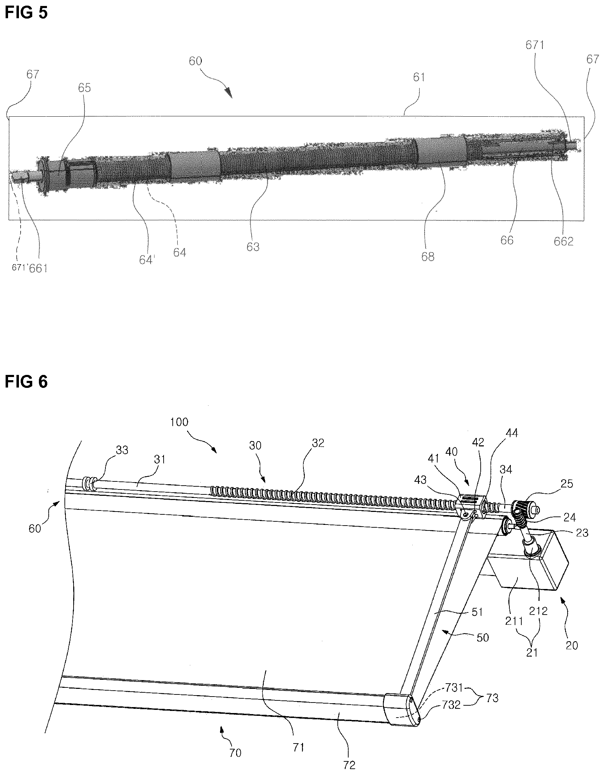

Figs. 1 and 2 are exploded and enlarged perspective views showing the electric-powered sun visor for a vehicle according to the present invention and Figs. 4 and 5 are perspective views showing the dissembling and assembling states of the tension maintaining part of the electric-powered sun visor for a vehicle according to the present invention. For the convenience of the description, as shown, the right side with respect to Figs.1 and 2 corresponds to one side surface of the tension maintaining part 60, and the left side corresponds to the other side surface of the tension maintaining part 60 (wherein those in Figs.4 and 5 are symmetrical to those in Figs.1 and 2).

The tension maintaining part 60 as the screen roll includes: the cylindrical body 61 mounted into the second mounting hole 13 of the mounting frame 10 to develop or return the shading screen 71 wound on the outer peripheral surface thereof; the spring 63 mounted outside of the fastening bar 66, to which extension force is applied; the first and second noise preventing tubes 64 and 64' made of a rubber material and mounted outside and inside the spring 63 to prevent the generation of noise when the shading screen 71 is developed or returned; the spring cap 65 mounted on one side peripheral surface of the fastening bar 66 and having a spring mounting portion 652 on which the other side surface of the spring 63 is fixedly mounted formed on the other side surface thereof and a fastening bar through-hole 651 formed on both side surfaces thereof to pass the fastening bar 66 therethrough; the fastening bar 66 inserted into the spring 63 having the first and second noise preventing tubes 64 and 64' and into the spring cap 65 and having the fastener 661 mounted on one side peripheral surface thereof in such a manner as to be fixedly inserted into a fixing hole 671' of the spring roll cap 67 and the fastening hole 662 formed on the other side surface thereof in such a manner as to fasten a roll fastener 671 of the spring roll cap 67 inserted into the other side surface of the body 61 to fasten the fastening bar 66 thereto; and the spring roll caps 67 mounted on one side peripheral surface and the other side peripheral surface of the body 61 and having the fixing hole 671' formed to insert the fastener 661 of the fastening bar 66 thereinto and the roll fastener 671 fastened to the fastening hole 662 of the fastening bar 66.

The spring 63 is mounted inside the cylindrical body 61 functioning as a winder, in the state where the first and second noise preventing tubes 64 and 64' are mounted outside and inside the spring 63, and the fastening bar 66 is inserted into the interior of the spring 63. Next, the spring roll caps 67 are fastened to both side surfaces of the body 61 wherein the fastener 661 of the fastening bar 66 is inserted into the fixing hole 671' of the spring roll cap 67 mounted on one side peripheral surface of the body 61, thereby fixing one side peripheral surface of the fastening bar 66 to one side peripheral surface of the body 61, while the fastening hole 662 of the fastening bar 66 is fastened to the roll fastener 671 of the spring roll cap 67 mounted on the other side peripheral surface of the body 61, thereby fixing the other peripheral surface of the fastening bar 66 to the other side peripheral surface of the body 61 to allow the spring 63 to have the extension force in the interior of the body 61.

When the shading screen 71 is developed and returned, accordingly, the tension of the shading screen 71 is easily maintained and the generation of the noise is prevented. Further, the spring 63 is fixed in the interior of the body 61, from which the extension force is applied, and the body 61 is not moved to prevent the shading screen 71 from being moved due to the external impact generated upon the development to the outside.

Further, the tension maintaining part 60 includes a cylindrical non-woven fabric 68 mounted on the outer peripheral surface of the second noise preventing tube 64' to further prevent the generation of noise during the operation of the spring 63 and the movement of the spring 63.

The screen part 70 (see Figs.1 to 3) includes: the shading screen 71 as a body adapted to be wound on the outer peripheral surface of the body 61 of the tension maintaining part 60 in such a manner as to be returned or developed to/from the inside and outside of the body 61; the support bar 72 mounted on the bottom portion of the body 71 to prevent the shading screen 71 from sagging or wrinkling upon the development of the shading screen 71; and the support bar covers 73 coupled to both side surfaces of the support bar 72, each having the linkage fastening hole 731 fastened to correspond to the second fastening hole 53 of the linkage 50 as the folding part and support bar fastening holes 732 formed on the interior and side surface thereof in such a manner as to be fastened to both side surfaces of the support bar 72.

The lower portion of the linkage 50 is fastened to the linkage fastening hole 731 of each support bar cover 73, and as the linkage 50 is moved, the body 71 as the shading screen laid on the outside of the linkage 50 is returned or developed to/from the inside and outside of the body 61 of the tension maintaining part 60.

The support bar 72 is fastened to the support bar fastening holes 732 of each support bar cover 73 and further prevents the shading screen 71 from sagging or wrinkling upon the development of the shading screen 71.

The base cover 80 includes: the body 81 coupled to the cover mounting holes 14 formed on both side surfaces of the mounting frame 10 to prevent each part (20 to 70) from being escaped to the outside and to improve the outer appearance of the sun visor 100; the insertion hole 82 formed in the interior of the body 81 to insert the rear surface portion 214 of the body 211 of the actuator 21 on which the rink case 22 is laid in the state of mounting the gear wire 23, the worm gear 24 and the helical gear 25 of the power transmitting part 20 thereinto; and the fixing holes 83 formed on both side surfaces of the body 81 to correspond to the fixing holes 15 of the mounting frame 10 in such a manner as to allow the base cover 80 and the mounting frame 10 to be fixed through fasteners to the vehicle frame disposed above the front surface glass or the rear surface glass in front of or behind the driver seat or the passenger seat in the interior of the vehicle.

The formation of the base covers 80 mounted on both side surfaces of the mounting frame 10 prevents the power transmitting part 20, the movement inducing part 30, the horizontal distance moving parts 40, the folding parts 50, the tension maintaining part 60 and the screen part 70 mounted into the first and second mounting holes 12 and 13 of the mounting frame 10 from being escaped to the outside and further improves the outer appearance of the electric-powered sun visor 100 when mounted on the vehicle.

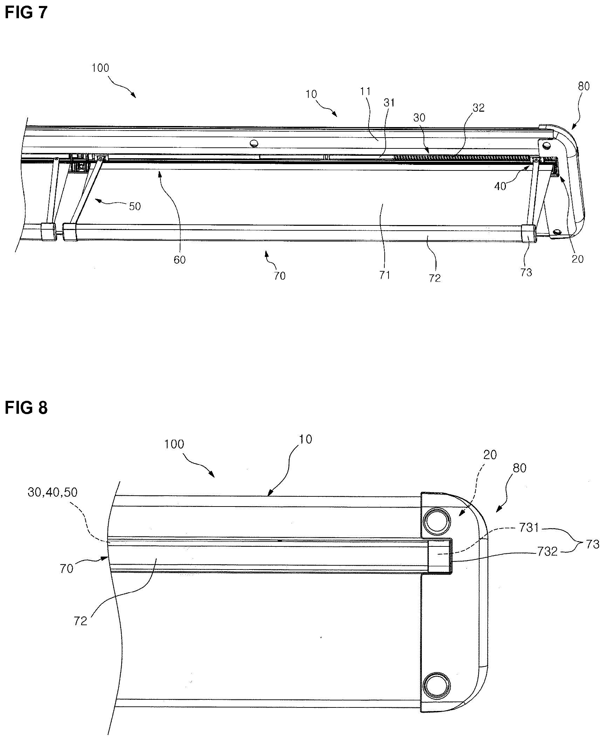

As shown in Figs.6 to 8 (see Figs.1 and 2 for their detailed structure), through the electric-powered sun visor 100 for a vehicle according to the present invention having the mounting frame 10, the power transmitting part 20, the movement inducing part 30, the horizontal distance moving parts 40, the folding parts 50, the tension maintaining part 60, the screen part 70 and the base covers 80 configured to have the above-mentioned structure, when the shading screen 71 is developed or returned from/to the outside or inside of the mounting frame 10 mounted on the vehicle, the gear wire 23, the worm gear 24 and the helical gear 25 of the power transmitting part 20 are insertedly mounted into the space portion 224 of the rink case body 221, and after that, the rink case cover 26 is fastened to the top portion of the rink case body 221. As the front surface portion of the actuator body 211 is laid on the layer of the mounting frame 10 and the rear surface portion 214 of the actuator body 211 is inserted into the insertion hole 82 of the base cover 80, the screw line 242 of the worm gear 24 insertedly mounted into the space portion 224 of the rink case body 221 is fastened to the outside of the screw line 252 of the helical gear 25, at the same height as the helical gear 25 fastened to one side surface of the helical screw 30 mounted into the first mounting hole 12 of the mounting frame 10 and inserted into the helical gear insertion hole 223 formed on the other side surface of the body 221 of the rink base 22, so that the helical gear 25 is rotated by the rotation of the worm gear 24 to transmit the power to the helical screw 30.

The power generated from the actuator 21 is not transmitted directly to the helical screw 30, but transmitted thereto through the gear wire 23, the worm gear 24, and the helical gear 25, which minimizes the vibration of the actuator 21 and prevents the occurrence of shaking caused by the assembly gap of the actuator 21. Further, the power generated from the actuator 21 is transmitted gently to the helical screw 30, which allows the shading screen 71 of the electric-powered sun visor 100 to be accurately developed and returned. Through the driving of the motor mounted inside the body 211 of the actuator 21, the noise during the driving of the actuator 21 can be substantially reduced.

Through the rotation of the helical gear as the movement inducing part 30 fastened to the helical gear 25 of the power transmitting part 20, the slide gear as the horizontal distance moving part 40 is easily moved forward and backward horizontally in the interior of the mounting frame 10, and thus, the linkage 50 as the folding part 50 fastened to the slide gear is easily developed or returned.

For example, when the slide gears 40 are moved forward by 217mm to the center 33 of the helical screw 30 in the horizontal direction on the outer peripheral surface of the helical screw 30, the linkages 50 are rotated to 84° and thus developed to the outside of the mounting frame 10, and contrarily, when the slide gears 40 are moved backward by 217mm to one side surface 34 and the other side surface 35 of the helical screw 30 in the horizontal direction, the linkages 50 are rotated reversely to 84° and thus returned to the inside of the mounting frame 10.

Further, after the linkages 50 are rotated to 84° and thus developed to the outside of the mounting frame 10, they are maintained to the folded angle of 5° on one side surface of the shading screen 71 to allow the shading screen 71 to be functioned well.

According to the present invention, each linkage 50 has one single body 51, which is different from the conventional practice wherein a plurality of linkages is connected, so that the movements of the linkage 50 caused by external impacts upon the development to the outside can be fully prevented, and If necessary, the horizontally forward or backward moving distance of each slide gear 40 may be set within 300mm, which causes the development length of the shading screen 71 to be extended to increase the shading area.

While the shading screen 71 is being developed and returned, the tension of the shading screen 71 can be easily maintained by means of the tension maintaining part 60 having the body 61, the spring 63, the spring cap 65, the fastening bar 66 and the spring roll caps 67, and further, the generation of noise when the shading screen 71 is developed or returned can be prevented by means of the first and second noise preventing tubes 64 and 64'. Also, the spring 63 is fixed inside the body 61 of the tension maintaining part 60 to apply the extension force therefrom, and the body 61 is fixed to the screen roll caps 67 and the mounting frame 10, without any movements, thereby preventing the movements of the shading screen 71 caused by the external impacts at the time when the shading screen 71 is developed to the outside. Moreover, the balance of the force of developing or returning the shading screen 71 is uniformly maintained by means of the power transmitting part 20, the movement inducting part 30, the horizontal distance moving parts 40, the folding parts 50 and the tension maintaining part 60, thereby preventing the shading screen 71 from sagging and wrinkling. Further, the sagging and wrinkling of the shading screen 71 can be further prevented by means of the support bar 72 of the screen part 70.

Further, the front surface portion of the actuator body 211 is laid on the layer of the mounting frame 10, and the rear surface portion 214 of the actuator body 211 wherein the gear wire 23, the worm gear 24 and the helical gear 25 mounted inside the rink case body 221 are disposed is inserted into the insertion hole 82 of the base cover 80. Thus, the base covers 80 are mounted on both side surfaces of the mounting frame 10 to prevent the power transmitting part 20, the movement inducing part 30, the horizontal distance moving parts 40, the folding parts 50 and the tension maintaining part 60 embedded in the first and second mounting holes 12 and 13 of the mounting frame 10 from being escaped to the outside. Next, the fasteners are fastened to the fixing holes 15 and 83 formed to pass through the mounting frame 10 and each base cover 80, which enables the mounting and dismounting to be easily performed and improves the mounting operations. When the sun visor 100 is mounted on the vehicle, the outer appearance thereof can be more improved by means of the formation of the base covers 80. Accordingly, the electric-powered sun visor 100 for a vehicle according to the present invention can protect the driver's or passenger's field of vision from the sunlight, thereby ensuring excellent vision and safe driving.

If necessary, furthermore, one electric-powered sun visor 100 for a vehicle according to the present invention, not the plurality of electric-powered sun visors 100 for a vehicle, may be mounted on the vehicle frame above the front surface glass or the rear surface glass in front of or behind the driver seat or the passenger seat at the interior of the vehicle.

On the other hand, the electric-powered sun visor 100 for a vehicle according to the present invention may be provided with a center stopper and shaft guides fixed to the center surface 33 and both side peripheral surfaces 34 and 35 of the movement inducting part 30, thereby preventing the distance restriction of the horizontal distance moving parts 40 and the escape to the outside, and alternatively, the electric-powered sun visor 100 for a vehicle according to the present invention may be provided with screen roll guides fixed to both side surfaces of the body 61 of the screen roll 60, thereby preventing the escape of the screen roll 60 to the outside.

### Advantageous Effects

As described above, the electric-powered sun visor for a vehicle according to the present invention has the following advantages:
First, the conventional problems as mentioned above can be solved.
Second, the power generated from the actuator is transmitted to the helical screw through the gear wire, the worm gear, and the helical gear, which minimizes the vibration of the actuator and prevents the occurrence of shaking caused by the assembly gap of the actuator.
Third, the power generated from the actuator is transmitted gently to the helical screw, which allows the shading screen of the electric-powered sun visor to be accurately developed and returned and prevents the generation of the noise during the driving of the actuator.
Fourth, the shading screen can be developed to long width to increase the shading area.
Fifth, the generation of noise when the shading screen is developed or returned can be minimized, the movements of the shading screen can be prevented, and the balance of the force of developing or returning the shading screen can be uniformly maintained.
Sixth, the sagging and wrinkling of the shading screen can be prevented, and it is easy to be mounted on the vehicle to improve the mounting operation.
Seventh, the outer appearance of the sun visor can be improved when the sun visor is mounted, and the driver's or passenger's field of vision can be protected from the sunlight to ensure excellent vision and safe driving.

It is to be understood that the above detailed description of preferred embodiments of the invention are provided by way of example only. Various details of design, construction and procedure may be modified without departing from the scope of the invention, as set forth in the appended claims.

## Claims

1. An electric-powered sun visor (100) for a vehicle mounted at a vehicle frame disposed above the front surface glass or the rear surface glass at the interior of the vehicle in such a manner as to allow a shading screen to be developed or returned in an electrically powered manner, the electric-powered sun visor (100) comprising:
a mounting frame (10) adapted to mount parts (20) to (80) thereon and fixed to the vehicle;
the power transmitting part (20) having an actuator (21) mounted on one side surface of the mounting frame (10), from which power is transmitted, a rink case (22) mounted on the top portion of the actuator (21) and having a gear wire (23), a worm gear (24) and a helical gear (25) mounted thereinto, and a rink case cover (26);
the movement inducing part (30) mounted into a first mounting hole (12) of the mounting frame (10) and formed of a helical screw rotated together with the rotation of the gear wire (23), the worm gear (24) and the helical gear (25) of the power transmitting part (20);
the horizontal distance moving parts (40) each mounted onto the outer peripheral surface of the movement inducing part (30) and formed of a slide gear moved forward and backward in a horizontal direction by means of the rotation of the movement inducing part (30) as the helical screw;
the folding parts (50) each serving as a linkage fastened to each horizontal distance moving part (40) and the screen part (70) and folded to the inside and outside of the mounting frame (10) through the horizontal distance movement of each horizontal distance moving part (40);
the tension maintaining part (60) serving as a screen roll mounted into a second mounting hole (13) of the mounting frame (10) and adapted to maintain the tension upon the development and return of a shading screen (71), the tension maintaining part (60) having a body (61), a spring (63), first and second noise preventing tubes (64) and (64'), a spring cap (65), a fastening bar (66), and spring roll caps (67);
the screen part (70) adapted to be wound on the outer peripheral surface of the body (61) of the tension maintaining part (60) and having the shading screen (71) returned or developed to/from the inside and outside of the body (61), a support bar (72), and support bar covers (73); and
the base covers (80) coupled to both side surfaces of the mounting frame (10) to prevent each part (20) to (70) from being escaped to the outside and to improve the outer appearance of the sun visor, **characterized in that** each folding part (50) comprises:
a body (51) fastened to the slide gear as the horizontal distance moving part (40) and the support bar cover (73) of the screen part (70) in such a manner as to be folded to the inside and outside of the mounting frame (10) in accordance with the forward and backward movements of the horizontal distance of the slide gear (40);
a first fastening hole (52) formed on the upper portion of the body (51) to fasten the linkage fastening holes (43) of the slide gear (40) thereto; and
a second fastening hole (53) formed on the lower portion of the body (51) to fasten a linkage fastening holes (731) of the support bar cover (73) thereto.

2. The electric-powered sun visor for a vehicle according to claim 1,
wherein the power transmitting part (20) comprises:
the actuator (21) mounted on one side surface of the mounting frame (10) and having a body (211) having a motor mounted at the inside thereof to generate power from an output shaft of the motor through the driving of the motor by the application of power thereto and a gear wire fastening hole (212) formed on the top portion of the body (211);
the rink case (22) mounted on the top portion of the actuator (21) and serving as a gear box in which the gear wire (23), the worm gear (24) and the helical gear (25) are insertedly mounted in a space portion (224) formed inside a body (221) thereof;
the gear wire (23) having a body (231) rotatably mounted in the space portion (224) of the body (221) of the rink case (22) to transmit power to the worm gear (24), an actuator fastener (233) formed on the lower portion of the body (231) in such a manner as to be fastened to the output shaft of the motor of the actuator (21), and a worm gear coupler (232) formed on the top portion of the body (231) in such a manner as to be inserted into an insertion hole (243) of the worm gear (24);
the worm gear (24) having a body (241) inserted into the worm gear coupler (232) of the gear wire (23) and rotated together with the rotation of the body (231) of the gear wire (23) to transmit the power to the helical gear (25), a screw line (242) formed on the outer peripheral surface of the body (241) in such a manner as to be fastened correspondingly to a screw line (252) of the helical gear (25), and an insertion hole (243) formed at the lower portion of the body (241) to insert the worm gear coupler (232) of the gear wire (23) thereinto; and
the helical gear (25) having a body (251) fastened to the outside of the worm gear (24) and rotated together with the worm gear (24) to transmit the power to the helical screw (30) as the movement inducing part, a screw line (252) formed on the outer peripheral surface of the body (251) in such a manner as to be fastened correspondingly to the screw line (242) of the worm gear (24), and helical screw fixing holes (253) formed on both side surfaces of the body (251) to fix one side surface of the body (31) of the helical screw (30) by means of a fastener thereto.

3. The electric-powered sun visor for a vehicle according to any one of claim 1 or 2, wherein the rink case (22) comprises:
the body (221) having the gear wire (23), the worm gear (24) and the helical gear (25) mounted at the inside thereof and mounted on the outside of the gear wire fastening hole (212) of the actuator (21);
the space portion (224) formed at the inside of the body (221) to insert the gear wire (23), the worm gear (24) and the helical gear (25) thereinto;
a gear wire through-hole (222) formed on the center of the lower portion of the body (221) to pass the actuator fastener (233) of the gear wire (23) therethrough;
the helical gear insertion hole (223) formed on the other side surface of the body (221) to insert the helical gear (25) fastened to the one side surface of the helical screw (30) thereinto; and
fastening holes (225) formed on the top portion of the body (221) and fastened to fastening holes (262) formed on the rink case cover (26) by means of bolts (263).

4. The electric-powered sun visor for a vehicle according to any one of claim 1 or 2, wherein after the gear wire (23), the worm gear (24) and the helical gear (25) are insertedly mounted in the space portion (224) of the body (221) of the rink case (22), the rink case cover (26) is fastened to the top portion of the body (221) of the rink case (22), the front surface portion (213) of the body (211) of the actuator (21) is laid on the layer of the mounting frame (10), and next, the rear surface portion of the body (211) is inserted into an insertion hole (82) of the base cover (80).

5. The electric-powered sun visor for a vehicle according to claim 1,
wherein the mounting frame (10) comprises:
a body (11) made of a metal or synthetic resin material and adapted to be fixed to the vehicle frame disposed above the front surface glass or the rear surface glass at the interior of the vehicle;
the first mounting hole (12) formed on one side surface of the body (11), into which the movement inducing part (30) formed of the helical gear is insertedly mounted;
the second mounting hole (13) formed on the side surface of the first mounting hole (12), into which the screen roll body (61) of the tension maintaining part (60) is insertedly mounted;
the layer formed on the side surface of the second mounting hole (13) to insertingly lay the front surface portion of the body (211) of the actuator (21) of the power transmitting part (20) thereon;
cover mounting holes (14) formed on both side surfaces of the body (11) to mount the base covers (80) thereon; and
fixing holes (15) formed on both side surfaces of the underside of the body (11) to allow the body (11) and the base cover body (71) to be fixed by means of fasteners to the vehicle frame at the interior of the vehicle.

6. The electric-powered sun visor for a vehicle according to claim 1,
wherein the movement inducing part (30) comprises:
a body (31) mounted into the first mounting hole (12) of the mounting frame (10) and fixed on one side peripheral surface thereof to the helical screw fixing holes (253) of the helical gear (25) fastened to the outer peripheral surface of the worm gear (24) in such a manner as to be rotated in clockwise or counterclockwise direction by the rotation of the worm gear (24) and the helical gear (25); and
the screw line (32) having an inclined surface between 15° and 45° formed on one side peripheral surface (34) of the body (31) in such a manner where a forward arranged screw line is formed or a reverse arranged screw line is formed to have the reverse inclined surface to the inclined surface of the forward arranged screw line, while the screw line (32) being formed on the other side peripheral surface (35) of the body (31) in such a manner where the reverse arranged screw line or the forward arranged screw line is formed reversely with respect to the forward arranged screw line or the reverse arranged screw line formed on one side peripheral surface (34) of the body (31).

7. The electric-powered sun visor for a vehicle according to claim 1,
wherein each horizontal distance moving part (40) comprises:
a body (41) mounted to the outside of one side peripheral surface (34) and the other side peripheral surface (35) of the helical screw body (31) on which the forward or reverse arranged screw line (32) of the movement inducing part (30) is formed in such a manner as to be moved forward to the center (33) of the helical screw body (31) or moved backward to one side peripheral surface (34) and the other side peripheral surface (35) of the body (31) in a horizontal direction thereof through the rotation of the helical screw body (31) in the clockwise or counterclockwise direction;
a fixing hole (42) defined as a space portion formed on the outside of the body (41) to fix the outer peripheral surface of the helical screw body (31) and to fasten the linkage (50) thereto;
linkage fastening holes (43) formed on the top and bottom portions of the fixing hole (42); and
a through-hole (44) formed on the side surface of the body (41) to pass one side peripheral surface (34) of the helical screw (30) therethrough.

8. The electric-powered sun visor for a vehicle according to claim 1,
wherein the tension maintaining part (60) comprises:
the cylindrical body (61) mounted into the second mounting hole (13) of the mounting frame (10) to develop or return the shading screen (71) wound on the outer peripheral surface thereof;
the spring (63) mounted outside of the fastening bar (66), to which extension force is applied;
the first and second noise preventing tubes (64) and (64') made of a rubber material and mounted outside and inside the spring (63) to prevent the generation of noise when the shading screen (71) is developed or returned;
the spring cap (65) mounted on one side peripheral surface of the fastening bar (66) and having a spring mounting portion (652) on which the other side surface of the spring (63) is fixedly mounted formed on the other side surface thereof and a fastening bar through-hole (651) formed on both side surfaces thereof to pass the fastening bar (66) therethrough;
the fastening bar (66) inserted into the spring (63) having the first and second noise preventing tubes (64) and (64') and into the spring cap (65) and having a fastener (661) mounted on one side peripheral surface thereof in such a manner as to be fixedly inserted into a fixing hole (671') of the spring roll cap (67) and a fastening hole (662) formed on the other side surface thereof in such a manner as to fasten a roll fastener (671) of the spring roll cap (67) inserted into the other side surface of the body (61) to fasten the fastening bar (66) thereto; and
the spring roll caps (67) mounted on one side peripheral surface and the other side peripheral surface of the body (61) and having the fixing hole (671') formed to insert the fastener (661) of the fastening bar (66) thereinto and the roll fastener (671) fastened to the fastening hole (662) of the fastening bar (66).

9. The electric-powered sun visor for a vehicle according to claim 1,
wherein the screen part (70) comprises:
the shading screen (71) as a body adapted to be wound on the outer peripheral surface of the body (61) of the tension maintaining part (60) in such a manner as to be returned or developed to/from the inside and outside of the body (61);
the support bar (72) mounted on the bottom portion of the body (71) to prevent the shading screen (71) from sagging or wrinkling upon the development of the shading screen (71); and
the support bar covers (73) coupled to both side surfaces of the support bar (72), each having the linkage fastening hole (731) fastened to correspond to the second fastening hole (53) of the linkage (50) as the folding part and support bar fastening holes (832) formed on the interior and side surface thereof in such a manner as to be fastened to both side surfaces of the support bar (72).

10. The electric-powered sun visor for a vehicle according to claim 1,
wherein each base cover (80) comprises:
the body (81) coupled to the cover mounting holes (14) formed on both side surfaces of the mounting frame (10) to prevent each part (20) to (70) from being escaped to the outside and to improve the outer appearance of the sun visor (100);
the insertion hole (82) formed in the interior of the body (81) to insert the rear surface portion (214) of the body (211) of the actuator (21) on which the rink case (22) is laid in the state of mounting the gear wire (23), the worm gear (24) and the helical gear (25) of the power transmitting part (20) thereinto; and
the fixing holes (83) formed on both side surfaces of the body (81) to correspond to the fixing holes (15) of the mounting frame (10) in such a manner as to allow the base cover (80) and the mounting frame (10) to be fixed through fasteners to the vehicle frame disposed above the front surface glass or the rear surface glass in front of or behind the driver seat or the passenger seat in the interior of the vehicle.

11. The electric-powered sun visor for a vehicle according to claim 1,
wherein the number of electric-powered sun visors is not plural, but singular.

12. The electric-powered sun visor for a vehicle according to any one of claim 1 or 7, wherein the tension maintaining part (60) further comprises a non-woven fabric (68) mounted on the outer peripheral surface of the second noise preventing tube (64').

## Patentansprüche

1. Elektrisch angetriebene Sonnenblende (100) für ein Fahrzeug, angebracht an einem Fahrzeugrahmen, angeordnet im Inneren des Fahrzeugs über dem Frontscheibenglas oder dem Heckscheibenglas, derart, um es einem Sonnenschutzschirm zu ermöglichen, in elektrisch angetriebener Weise abgewickelt oder zurückgeführt zu werden, die elektrisch angetriebene Sonnenblende (100), umfassend:
einen Befestigungsrahmen (10), angepasst, um Elemente (20) bis (80) darauf zu montieren, und am Fahrzeug befestigt;
das Kraftübertragungselement (20), von dem Leistung übertragen wird, das einen Stellantrieb (21) aufweist, der an einer Seitenfläche des Befestigungsrahmens (10) montiert ist, ein Getriebegehäuse (22), das auf dem oberen Teil des Stellantriebs (21) angebracht ist, und das eine Getriebeachse (23), einen Schneckentrieb (24) und ein Schraubenrad (25) aufweist, welche in dieses hinein montiert sind, und eine Getriebegehäuseabdeckung (26);
das Antriebselement (30), montiert in einem ersten Befestigungsloch (12) des Befestigungsrahmens (10) und aus einer Gewindeschraube gebildet, welche zusammen mit der Getriebeachse (23), dem Schneckentrieb (24) und dem Schraubenrad (25) des Kraftübertragungselements (20) rotiert;
die Horizontalabstandsbewegungselemente (40), jeweils montiert auf der äußeren Umfangsfläche des Antriebselements (30) und ausgebildet als Gleitzahnrad, welches sich mittels der Drehung des Antriebselements (30) in Form einer Gewindeschraube vorwärts und rückwärts in einer horizontalen Richtung bewegt;
die Faltelemente (50), welche jeweils als eine Anlenkung dienen, befestigt an jedem der Horizontalabstandsbewegungselemente (40) und dem Schirmelement (70) und welche sich durch die horizontale Abstandsbewegung jedes der Horizontalabstandsbewegungselemente (40) auf die Innenseite und Außenseite des Montagerahmens (10) falten;
das Spannungshaltungselement (60), welches als Schirmrolle dient, montiert in ein zweites Montageloch (13) des Befestigungsrahmens (10), und vorgesehen, die Spannung auf die Abwicklung und Rückführung eines Abschattungsschirms (71) zu halten, das Spannungshaltungselement (60) einen Körper (61), eine Feder (63), erste und zweite Lärmdämpfungsrohre (64) und (64'), eine Federkappe (65), eine Befestigungsstange (66) und Federrollenkappen (67) aufweist;
das Schirmelement (70), vorgesehen, um auf der äußeren Umfangsfläche des Körpers (61) des Spannungshaltungselements (60) aufgewickelt zu werden, und einen Schattierungsschirm (71), der zu/von der Innenseite und der Außenseite des Körpers (61) zurückgeführt oder abgewickelt wird, eine Stützstange (72) und Stützstangenabdeckungen (73); und
die Basisabdeckungen (80), gekoppelt mit den beiden Seitenflächen des Montagerahmens (10), um zu verhindern, dass jedes Element (20) bis (70) nach außen hin entweicht, und um das äußere Erscheinungsbild der Sonnenblende zu verbessern, **dadurch gekennzeichnet, dass** jedes Faltelement (50) umfasst:
einen Körper (51), derart befestigt an dem Gleitzahnrad als Horizontalabstandsbewegungselement (40) und der Stützstangenabdeckung (73) des Schirmelements (70), um sich zu der Innenseite und der Außenseite des Befestigungsrahmens (10) in Übereinstimmung mit den Vorwärts- und Rückwärtsbewegungen des horizontalen Abstandes des Gleitzahnrads (40) zu falten;
ein erstes Befestigungsloch (52), ausgebildet an dem oberen Teil des Körpers (51), um die Anlenkungsbefestigungslöcher (43) des Gleitzahnrads (40) daran zu befestigen; und
ein zweites Befestigungsloch (53), ausgebildet an dem unteren Teil des Körpers (51), um die Anlenkungsbefestigungslöcher (731) der Stützstangenabdeckung (73) daran zu befestigen.

2. Elektrisch angetriebene Sonnenblende für ein Fahrzeug, gemäß Anspruch 1, wobei das Kraftübertragungselement (20) umfasst:
den Stellantrieb (21), der an einer Seitenfläche des Befestigungsrahmens (10) montiert ist, und einen Körper (211) aufweist, welcher einen an dessen Innenseite montierten Motor aufweist, um Kraft von einer Ausgangswelle des Motors durch den Antrieb des Motors durch das Anlegen von Spannung daran zu erzeugen, und ein Befestigungsloch (212) für die Getriebeachse, das auf dem oberen Teil des Körpers ausgebildet ist (211);
das Getriebegehäuse (22), das an dem oberen Abschnitt des Stellantriebs (21) montiert ist und als ein Getriebekasten dient, in dem die Getriebeachse (23), der Schneckentrieb (24) und das Schraubenrad (25) in einem Raumabschnitt (224) innerhalb des Körpers (221) eingesetzt montiert sind;
die Getriebeachse (23) aufweisend einen Körper (231), der drehbar in dem Raumabschnitt (224) des Körpers (221) des Getriebegehäuses (22) montiert ist, um Energie auf den Schneckentrieb (24) zu übertragen, einen Stellantriebhalter (233), gebildet an dem unteren Teil des Körpers (231) derart, dass dieser an der Ausgangswelle des Motors des Stellantriebs (21) befestigt ist, und ein Schneckentriebkoppler (232), der auf dem oberen Teil des Körpers (231) derart gebildet ist, um in ein Einsetzloch (243) des Schneckentriebs (24) eingesetzt zu werden,
der Schneckentrieb (24) einen Körper (241) aufweist; der in den Schneckentriebkoppler (232) der Getriebeachse (23) eingeführt ist und sich zusammen mit der Drehung des Körpers (231) der Getriebeachse (23) dreht, um die Energie zu dem Schraubenrad (25) zu übertragen, eine Schraubenlinie (242) an der äußeren Umfangsfläche des Körpers (241) derart ausgebildet ist, um entsprechend an einer Schraubenlinie (252) des Schraubenrads (25) befestigt zu werden und ein Einsetzloch (243) am unteren Teil des Körpers (241), ausgebildet, um den Schneckentriebkoppler (232) der Getriebeachse (23) dort hinein einzusetzen; und
das Schraubenrad (25) einen Körper (251) aufweist, der an der Außenseite des Schneckentriebs (24) befestigt ist und zusammen mit dem Schneckentrieb (24) gedreht wird, um die Energie an die Schraubwendel (30) als Antriebselement zu übertragen, eine Schraubenlinie (252) an der äußeren Umfangsfläche des Körpers (251) derart ausgebildet, um wie entsprechend an der Schraubenlinie (242) des Schneckentriebs (24) befestigt zu werden, und Schraubenwendelbefestigungslöcher (253), gebildet auf beiden Seitenflächen des Körpers (251), um eine Seitenfläche des Körpers (31) der Schraubwendel (30) mittels eines Befestigungselements zu fixieren.

3. Elektrisch angetriebene Sonnenblende für ein Fahrzeug, gemäß einem der Ansprüche 1 oder 2, wobei das Getriebegehäuse (22) umfasst:
den Körper (221), aufweisend die Getriebeachse (23), den Schneckentrieb (24) und das Schraubenrad (25), welche an der Innenseite davon montiert sind, und auf der Außenseite des Getriebeachsenbefestigungsloch (212) des Stellantriebs (21) montiert ist;
den Raumbereich (224), ausgebildet an der Innenseite des Körpers (221), um die Getriebeachse (23), den Schneckentrieb (24) und das Schraubenrad (25) dort hinein einzusetzen;
ein Getriebeachsendurchgangsloch (222), das in der Mitte des unteren Teils des Körpers ausgebildet ist (221), um den Stellantriebhalter (233) der Getriebeachse (23) dort hindurch zu führen;
das Schraubenradeinsetzloch (223), das auf der anderen Seitenfläche des Körpers (221)ausgebildet ist, um das Schraubenrad (25) darin einzusetzen, befestigt an der einen Seitenfläche der Schraubwedel (30); und
Befestigungslöcher (225), ausgebildet auf dem oberen Teil des Körpers (221) und mittels Schrauben (263) befestigt an auf der Getriebegehäuseabdeckung (26) gebildeten Befestigungslöchern (262).

4. Elektrisch angetriebene Sonnenblende für ein Fahrzeug, gemäß einem der Ansprüche 1 oder 2, wobei, nachdem die Getriebeachse (23), der Schneckentrieb (24) und das Schraubenrad (25) in dem Raumabschnitt (224) des Körpers (221) des Getriebegehäuse (22) eingesetzt montiert sind, die Getriebegehäuseabdeckung (26) an dem oberen Abschnitt des Körpers (221) des Getriebegehäuse (22) befestigt wird, der vordere Oberflächenabschnitt (213) des Körpers (211) des Stellantriebs (21) auf die Ebene des Befestigungsrahmens (10) gelegt, und als nächstes der hintere Oberflächenabschnitt des Körpers (211) in ein Einsetzloch (82) der Basisabdeckung (80) eingesetzt wird.

5. Elektrisch angetriebene Sonnenblende für ein Fahrzeug, gemäß Anspruch 1, wobei der Befestigungsrahmen (10) umfasst:
einen Körper (11) aus einem Metall oder Kunstharzmaterial und angepasst, um an dem Fahrzeugrahmen befestigt zu werden, welcher über dem Frontscheibenglas oder dem Heckscheibenglas im Innern des Fahrzeugs angeordnet ist;
das erste Befestigungsloch (12), ausgebildet auf einer Seitenfläche des Körpers (11), in welches das Antriebselement (30), ausgebildet als Schraubenrad, eingesetzt ist;
das zweite Befestigungsloch (13), ausgebildet an der Seitenfläche des ersten Befestigungsloch (12), in welches der Schirmrollenkörper (61) des Spannungshaltungselements (60) eingesetzt ist;
die Ebene, ausgebildet auf der Seitenfläche des zweiten Befestigungslochs (13) zum darauf Auflegen des vorderen Oberflächenabschnitts des Körpers (211) des Stellantriebs (21) des Kraftübertragungselements (20);
Abdeckungsbefestigungslöcher (14), ausgebildet an beiden Seitenflächen des Körpers (11), um die Basisabdeckung (80) darauf zu montieren; und
Befestigungslöcher (15), gebildet auf beiden Seitenflächen der Unterseite des Körpers (11), um zu ermöglichen, den Körper (11) und den Basisabdeckkörper (71) mittels Befestigungseinrichtungen an dem Fahrzeugrahmen im Innern des Fahrzeugs zu befestigenden.

6. Elektrisch angetriebene Sonnenblende für ein Fahrzeug, gemäß Anspruch 1, wobei das Antriebselement (30) umfasst:
einen Körper (31), angebracht in dem ersten Befestigungsloch (12) des Befestigungsrahmens (10), und befestigt auf einer Seitenumfangsfläche davon an den Schraubenradbefestigungslöchern (253) des Schraubenrads (25), befestigt an den äußeren Umfangsfläche des Schneckentriebs (24), derart, um im oder gegen den Uhrzeigersinn durch die Drehung des Schneckentriebs (24) und des Schraubenrads (25) gedreht werden; und
die Schraubenlinie (32), die eine geneigte Fläche zwischen 15° und 45° aufweist, gebildet auf einer Seitenumfangsfläche (34) des Körpers (31), derart, in dem eine nach vorne angeordnete Schraubenlinie gebildet ist, oder eine umgekehrt angeordnete Schraubenlinie gebildet ist, um die umgekehrt geneigte Fläche an der geneigten Fläche der vorderen Schraubenlinie anzuordnen, während die Schraubenlinie (32) auf der anderen Seitenumfangsfläche (35) des Körpers (31) in einer solchen Weise angeordnet ist, wobei die umgekehrt angeordnete Schraubenlinie oder die vordere Schraubenlinie, in umgekehrter Richtung in Bezug auf die nach vorne angeordnete Schraubenlinie oder umgekehrt angeordneten Schraubenlinie auf einer Seitenumfangsfläche (34) des Körpers (31) ausgebildet ist.

7. Elektrisch angetriebene Sonnenblende für ein Fahrzeug, gemäß Anspruch 1, wobei jedes Horizontalabstandsbewegungselement (40) umfasst:
einen Körper (41), montiert an der Außenseite einer Seitenumfangsfläche (34) und der anderen Seitenumfangsfläche (35) des Schraubenkörpers (31), auf dem die vorwärts oder rückwärts angeordnete Schraubenlinie (32) des Antriebselements (30) derart ausgebildet ist, um vorwärts in die Mitte (33) des Schraubenkörpers (31) bewegt zu werden oder rückwärts zu einer Seitenumfangsfläche (34) und der anderen Seitenumfangsfläche (35) des Körpers (31) bewegt zu werden, in einer horizontalen Richtung desselben durch die Drehung des Schraubenkörpers (31) im Uhrzeigersinn oder im Gegenuhrzeigersinn;
ein Befestigungsloch (42), definiert als ein Raumabschnitt, ausgebildet auf der Außenseite des Körpers (41), um die äußere Umfangsoberfläche des Schraubenkörpers (31) zu fixieren und die Anlenkung (50) daran zu befestigen;
Anlenkungsbefestigungslöcher (43), gebildet auf den oberen und unteren Abschnitten des Befestigungslochs (42); und
ein Durchgangsloch (44), ausgebildet an der Seitenfläche des Körpers (41), um eine Seitenumfangsfläche (34) der Schraubwendel (30) dort hindurch zu führen.

8. Elektrisch angetriebene Sonnenblende für ein Fahrzeug, gemäß Anspruch 1, wobei das Spannungshaltungselement (60) umfasst:
den zylindrischen Körper (61), montiert in dem zweiten Montageloch (13) des Befestigungsrahmens (10), um den Schattierungsschirm (71), der auf der Außenumfangsfläche gewickelt ist, davon abzuwickeln oder dorthin rückzuführen;
die Feder (63), montiert außerhalb der Befestigungsstange (66), auf welche die Kraft für die Erstreckung angewendet wird;
die ersten und zweiten Lärmdämpfungsrohre (64) und (64'), hergestellt aus einem Gummimaterial, und außerhalb und innerhalb der Feder (63) montiert, um die Erzeugung von Geräusch zu verhindern, wenn der Schattierungsschirm (71) abgewickelt oder rückgeführt wird;
die Federkappe (65), montiert an einer Seitenumfangsfläche der Befestigungsstange (66) und einen Federbefestigungsabschnitt (652) aufweisend, auf dem die andere Seitenfläche der Feder (63) befestigt ist, gebildet auf deren anderen Seitenfläche, und ein Befestigungsstangendurchgangloch (651), gebildet an beiden Seitenflächen davon, um die Befestigungsstange (66) dort hindurch zu führen;
die Befestigungsstange (66), eingeführt in die Feder (63), welche das erste und zweite Lärmdämpfungsrohr (64) und (64') aufweist, und in die Federkappe (65), und ein Befestigungselement (661) auf einer Seite Umfangsfläche davon derart angebracht hat, um in einem Befestigungsloch (671') der Federrollenkappe (67) befestigt zu werden, und ein Befestigungsloch (662) auf der anderen Seitenfläche davon, ausgebildet derart, um einen Rollenhalter (671) der Federrollenkappe (67) zu befestigen, der in der anderen Seitenfläche des Körpers (61) eingesetzt ist, um die Befestigungsstange (66) daran zu befestigen; und
die Federrollenkappe (67), montiert auf einer Seitenumfangsfläche und der anderen Seitenumfangsfläche des Körpers (61) ,und das Befestigungsloch (671') aufweisend, um das Befestigungselement (661) der Befestigungsstange (66) dort hinein einzusetzen und der Rollenhalter (671), befestigt an dem Befestigungsloch (662) der Befestigungsstange (66).

9. Elektrisch angetriebene Sonnenblende für ein Fahrzeug, gemäß Anspruch 1, wobei das Schirmelement (70) umfasst:
den Schattierungsschirm (71) als einen Körper, angepasst, um an der äußeren Umfangsfläche des Körpers (61) des Spannungshaltungselements (60) in einer solchen Weise gewickelt zu werden, um in den Körper (61) hinein oder aus diesen heraus aufgewickelt oder rückgeführt zu werden;
die Stützstange (82), montiert auf dem unteren Teil des Körpers (71), um bei den Schattierungsschirm (71) ein Durchhängen oder Falten bei der Abwicklung des Schattierungsschirms (71) zu verhindern; und
die Stützstangenabdeckungen (83), gekoppelt an beiden Seitenflächen der Stützstange (72), wobei jede das Befestigungsloch (731) der Anlenkung befestigt hat, um mit dem zweiten Befestigungsloch (53) der Faltelemente (50) derart zu korrespondieren, wie den Faltelementen und Haltestangenbefestigungslöchern (832), die auf der Innenseite und der Seitenfläche desselben derart gebildet sind, um auf den beiden Seitenflächen der Stützstange (82) befestigt zu werden.

10. Elektrisch angetriebene Sonnenblende für ein Fahrzeug, gemäß Anspruch 1, wobei jede Basisabdeckung (80) umfasst:
den Körper (81), gekoppelt an die Deckelbefestigungslöcher (14), gebildet an beiden Seitenflächen des Montagerahmens (10), um zu verhindern, dass jedes Element (20) bis (70) nach außen hin entweicht, und um das äußere Erscheinungsbild der Sonnenblende (100) zu verbessern;
das Einführungsloch (82), ausgebildet im Innern des Körpers (81), um den hinteren Oberflächenabschnitt (214) des Körpers (211) des Stellantriebs (21), auf welchen das Getriebegehäuse (22), in dem Zustand des Montierens der Getriebeachse (23), der des Schneckentriebs (24) und des Schraubenrads (25) des Kraftübertragungselements (20) dort hinein, gelegt ist; und
die Befestigungslöcher (83), ausgebildet an beiden Seitenflächen des Körpers (81), um den Befestigungsbohrungen (15) des Befestigungsrahmens (10) derart zu entsprechen, um es dem Bodendeckel (80) und dem Befestigungsrahmen (10) zu ermöglichen, durch Befestigungselemente an dem Fahrzeugrahmen fixiert zu werden, angeordnet über dem Frontscheibenglas oder dem Heckscheibenglas vor oder hinter dem Fahrersitz oder dem Passagiersitz in dem Innenraum des Fahrzeugs.

11. Elektrisch angetriebene Sonnenblende für ein Fahrzeug, gemäß Anspruch 1, wobei die Anzahl von elektrisch angetriebenen Sonnenblenden nicht mehrfach ist, sondern einfach.

12. Elektrisch angetriebene Sonnenblende für ein Fahrzeug, gemäß einem der Ansprüche 1 oder 7, wobei das Spannungshaltungselement (60) ferner einen Vliesstoff (68) aufweist, welcher an der Außenumfangsfläche des zweiten Lärmdämpfungsrohres (64') montiert ist.

## Revendications

1. Pare-soleil à commande électrique (100) pour un véhicule monté sur une carrosserie de véhicule disposé au-dessus de la vitre de face avant ou de la vitre de face arrière à l'intérieur du véhicule de manière à permettre qu'un écran d'ombrage soit développé ou rétracté d'une manière à commande électrique, le pare-soleil à commande électrique (100) comprenant :
un cadre (10) de montage adapté au montage de parties (20) à (80) sur celui-ci et fixé au véhicule ;
la partie (20) de transmission d'énergie ayant un actionneur (21) monté sur une surface latérale du cadre (10) de montage, depuis lequel une énergie est transmise, un carter (22) d'engrenages monté sur la partie supérieure de l'actionneur (21) et ayant un fil (23) pour engrenages, une vis sans fin (24) et une roue hélicoïdale (25) montés dans celui-ci, et un capot (26) de carter d'engrenages ;
la partie (30) d'induction de mouvement montée dans un premier trou (12) de montage du cadre (10) de montage et constituée d'une vis hélicoïdale tournant en même temps que la rotation du fil (23) pour engrenages, de la vis sans fin (24) et de la roue hélicoïdale (25) de la partie (20) de transmission d'énergie ;
les parties mobiles (40) de distance horizontale chacune montées sur la surface périphérique extérieure de la partie (30) d'induction de mouvement et constituées d'une roue coulissante déplacée vers l'avant et vers l'arrière dans un sens horizontal au moyen de la rotation de la partie (30) d'induction de mouvement comme la vis hélicoïdale ;
les parties (50) pliantes servant chacune comme une liaison fixée à chaque partie mobile (40) de distance horizontale et à la partie écran (70) et pliées sur l'intérieur et l'extérieur du cadre (10) de montage par l'intermédiaire du mouvement de distance horizontale de chaque partie mobile (40) de distance horizontale ;
la partie (60) de maintien de tension servant comme un rouleau d'écran montée dans un deuxième trou (13) de montage du cadre (10) de montage et adaptée à maintenir la tension lors du développement et du retrait d'un écran (71) d'ombrage, la partie (60) de maintien de tension ayant un corps (61), un ressort (63), des premier et deuxième tubes (64) et (64') de prévention de bruit, un bouchon (65) de ressort, une barre (66) de fixation, et des bouchons (67) de rouleaux à ressorts ;
la partie (70) d'écran adaptée à être enroulée sur la surface périphérique extérieure du corps (61) de la partie (60) de maintien de tension et ayant l'écran (71) d'ombrage rétracté ou développé dans/de l'intérieur et l'extérieur du corps (61), une barre (72) de support, et des couvre-barre (73) de support ; et
des couvre-base (80) couplés aux deux surfaces latérales du cadre (10) de montage pour empêcher que chaque partie (20) à (70) n'échappe vers l'extérieur et pour améliorer l'aspect extérieur du pare-soleil, **caractérisé en ce que** chaque partie (50) pliante comprend :
un corps (51) fixé à la roue coulissante comme la partie mobile (40) de distance horizontale et au couvre-barre (73) de support de la partie (70) d'écran de manière à être plié sur l'intérieur et l'extérieur du cadre (10) de montage en fonction des mouvements vers l'avant et vers l'arrière de la distance horizontale de la roue coulissante (40) ;
un premier trou (52) de fixation formé sur la partie supérieure du corps (51) pour fixer les trous (43) de fixation de liaison de la roue coulissante (40) à celle-ci ; et
un deuxième trou (53) de fixation formé sur la partie inférieure du corps (51) pour fixer des trous (731) de fixation de liaison du couvre-barre (73) de support à celle-ci.

2. Pare-soleil à commande électrique pour un véhicule selon la revendication 1, dans lequel la partie (20) de transmission d'énergie comprend :
l'actionneur (21) monté sur une surface latérale du cadre (10) de montage et ayant un corps (211) ayant un moteur monté à l'intérieur de celui-ci pour générer une énergie depuis un arbre de sortie du moteur par l'intermédiaire de l'entraînement du moteur par l'application d'une énergie à celui-ci et un trou (212) de fixation de fil pour engrenages formé sur la partie supérieure du corps (211);
le carter (22) d'engrenages monté sur la partie supérieure de l'actionneur (21) et servant comme une boîte d'engrenages dans laquelle le fil (23) pour engrenages, la vis sans fin (24) et la roue hélicoïdale (25) sont montés par insertion dans une partie (224) d'espace formée à l'intérieur d'un corps (221) de celui-ci;
le fil (23) pour engrenages ayant un corps (231) monté rotatif dans la partie (224) d'espace du corps (221) du carter (22) d'engrenages pour transmettre une énergie à la vis sans fin (24), un système de fixation (233) d'actionneur formé sur la partie inférieure du corps (231) de manière à être fixé à l'arbre de sortie du moteur de l'actionneur (21), et un coupleur (232) de vis sans fin formé sur la partie supérieure du corps (231) de manière à être inséré dans un trou (243) d'insertion de la vis sans fin (24);
la vis sans fin (24) ayant un corps (241) inséré dans le coupleur (232) de vis sans fin du fil (23) pour engrenages et tournant ensemble avec la rotation du corps (231 du fil (23) pour engrenages pour transmettre l'énergie à la roue hélicoïdale (25), une ligne (242) de vis formée sur la surface périphérique extérieure du corps (241) de manière à être fixée de façon correspondante à une ligne (252) de vis de la roue hélicoïdale (25), et un trou (243) d'insertion formé au niveau de la partie inférieure du corps (241) pour insérer le coupleur (232) de vis sans fin du fil (23) pour engrenages dans celui-ci; et
la roue hélicoïdale (25) ayant un corps (251) fixé sur l'extérieur de la vis sans fin (24) et tournant ensemble avec la vis sans fin (24) pour transmettre l'énergie à la vis hélicoïdale (30) comme la partie d'induction de mouvement, une ligne (252) de vis formée sur la surface périphérique extérieure du corps (251) de manière à être fixée de façon correspondante à la ligne (242) de vis de la vis sans fin (24), et des trous (253) de fixation de vis hélicoïdale formés sur les deux surfaces latérales du corps (251) pour fixer une surface latérale du corps (31) de la vis hélicoïdale (30) au moyen d'un système de fixation à celui-ci.

3. Pare-soleil à commande électrique pour un véhicule selon l'une quelconque de la revendication 1 ou 2, dans lequel le carter (22) d'engrenages comprend :
le corps (221) ayant le fil (23) pour engrenages, la vis sans fin (24) et la roue hélicoïdale (25) montés à l'intérieur de celui-ci et monté sur l'extérieur du trou (212) de fixation de fil pour engrenages de l'actionneur (21);
la partie (224) d'espace formée à l'intérieur du corps (221) pour insérer le fil (23) pour engrenages, la vis sans fin (24) et la roue hélicoïdale (25) dans celle-ci;
un trou traversant (222) de fil pour engrenages formé sur le centre de la partie inférieure du corps (221) pour faire passer de système (233) de fixation d'actionneur du fil (23) pour engrenages à travers celui-ci ;
le trou (223) d'insertion de roue hélicoïdale formé sur l'autre surface latérale du corps (221) pour insérer la roue hélicoïdale (25) fixée sur la surface latérale de la vis hélicoïdale (30) dans celui-ci ; et
des trous (225) de fixation formés sur la partie supérieure du corps (221) et fixés à des trous (262) de fixation formés sur le capot (26) de carter d'engrenages au moyen de boulons (263).

4. Pare-soleil à commande électrique pour un véhicule selon l'une quelconque de la revendication 1 ou 2, dans lequel, après que le fil (23) pour engrenages, la vis sans fin (24) et la roue hélicoïdale (25) ont été montés par insertion dans la partie (224) d'espace du corps (221) du carter (22) d'engrenages, le capot (26) de carter d'engrenages est fixé à la partie supérieure du corps (221) du carter (22) d'engrenages, la partie (213) de surface avant du corps (211) de l'actionneur (21) est déposée sur la couche du cadre (10) de montage, et ensuite, la partie de surface arrière du corps (211) est insérée dans un trou (82) d'insertion du couvre-base (80).

5. Pare-soleil à commande électrique pour un véhicule selon la revendication 1, dans lequel le cadre (10) de montage comprend:
un corps (11) constitué d'un matériau métallique ou de résine synthétique et adapté à être fixé à la carrosserie de véhicule disposé au-dessus de la vitre de face avant ou de la vitre de face arrière à l'intérieur du véhicule ;
le premier trou (12) de montage formé sur une surface latérale du corps (11), dans lequel la partie (30) d'induction de mouvement constituée de la roue hélicoïdale est montée par insertion ;
le deuxième trou (13) de montage formé sur la surface latérale du premier trou (12) de montage, dans lequel le corps (61) de rouleau d'écran de la partie (60) de maintien de tension est monté par insertion ;
la couche formée sur la surface latérale du deuxième trou (13) de montage pour déposer par insertion la partie de surface avant du corps (211) de l'actionneur (21) de la partie (20) de transmission d'énergie sur celle-ci ;
des trous (14) de montage de recouvrement formés sur les deux surfaces latérales du corps (11) pour monter les couvre-base (80) sur ceux-ci ; et
des trous (15) de fixation formés sur les deux surfaces latérales du côté inférieur du corps (11) pour permettre que le corps (11) et le corps (71) de couvre-base soient fixés au moyen de systèmes de fixation à la carrosserie de véhicule à l'intérieur du véhicule.

6. Pare-soleil à commande électrique pour un véhicule selon la revendication 1, dans lequel la partie (30) d'induction de mouvement comprend :
un corps (31) monté dans le premier trou (12) de montage du cadre (10) de montage et fixé sur une surface périphérique latérale de celui-ci aux trous (253) de fixation de vis hélicoïdale de la roue hélicoïdale (25) fixée à la surface périphérique extérieure de la vis sans fin (24) de manière à tourner dans le sens horaire ou antihoraire par la rotation de la vis sans fin (24) et de la roue hélicoïdale (25) ; et
la ligne (32) de vis ayant une surface inclinée entre 15° et 45° formée sur une surface périphérique latérale (34) du corps (31) d'une manière où une ligne de vis agencée vers l'avant est formée ou une ligne de vis agencée inversement est formée de façon à avoir la surface inclinée inverse à la surface inclinée de la ligne de vis agencée vers l'avant, alors que la ligne (32) de vis étant formée sur l'autre surface périphérique latérale (35) du corps (31) d'une manière où la ligne de vis agencée inversement ou la ligne de vis agencée vers l'avant est formée inversement par rapport à la ligne de vis agencée vers l'avant ou la ligne de vis agencée inversement formée sur une surface périphérique latérale (34) du corps (31).

7. Pare-soleil à commande électrique pour un véhicule selon la revendication 1, dans lequel chaque partie mobile (40) de distance horizontale comprend :
un corps (41) monté sur l'extérieur d'une surface périphérique latérale (34) et l'autre surface périphérique latérale (35) du corps (31) de vis hélicoïdale sur lequel la ligne (32) de vis agencée vers l'avant ou inversement de la partie (30) d'induction de mouvement est formée de manière à être déplacée vers l'avant vers le centre (33) du corps (31) de vis hélicoïdale ou déplacée vers l'arrière vers une surface périphérique latérale (34) et l'autre surface périphérique latérale (35) du corps (31) dans un sens horizontal de celui-ci par la rotation du corps (31) de vis hélicoïdale dans le sens horaire ou antihoraire ;
un trou (42) de fixation défini comme une partie d'espace formé sur l'extérieur du corps (41) pour fixer la surface périphérique extérieure du corps (31) de vis hélicoïdale et pour fixer la liaison (50) à celui-ci ;
des trous (43) de fixation de liaisons formés sur les parties supérieure et inférieure du trou (42) de fixation ; et
un trou traversant (44) formé sur la surface latérale du corps (41) pour faire passer une surface périphérique latérale (34) de la vis hélicoïdale (30) à travers celui-ci.

8. Pare-soleil à commande électrique pour un véhicule selon la revendication 1, dans lequel la partie (60) de maintien de tension comprend :
le corps cylindrique (61) monté dans le deuxième trou (13) de montage du cadre (10) de montage pour développer ou rétracter l'écran (71) d'ombrage enroulé sur la surface périphérique extérieure de celui-ci ;
le ressort (63) monté à l'extérieur de la barre (66) de fixation, auquel une force d'extension est appliquée ;
les premier et deuxième tubes (64) et (64') de prévention de bruit constitués d'un matériau de caoutchouc et montés à l'extérieur et à l'intérieur du ressort (63) pour empêcher la génération de bruit lorsque l'écran (71) d'ombrage est développé ou rétracté ;
le bouchon (65) de ressort monté sur une surface périphérique latérale de la barre (66) de fixation et ayant une partie (652) de montage de ressort sur laquelle l'autre surface latérale du ressort (63) est montée fixe formée sur l'autre surface latérale de celui-ci et un trou traversant (651) de barre de fixation formé sur les deux surfaces latérales de celui-ci pour faire passer la barre (66) de fixation à travers celui-ci ;
la barre (66) de fixation insérée dans le ressort (63) ayant les premier et deuxième tubes (64) et (64') de prévention de bruit et dans le bouchon (65) de ressort et ayant un système (661) de fixation monté sur une surface périphérique latérale de celui-ci de manière à être inséré fixe dans un trou (671') de fixation du bouchon (67) de rouleau à ressort et un trou (662) de fixation formé sur l'autre surface latérale de celui-ci de manière à fixer un système (671) de fixation de rouleau du bouchon (67) de rouleau à ressort inséré dans l'autre surface latérale du corps (61) pour fixer la barre (66) de fixation à celui-ci ; et
les bouchons (67) de rouleaux à ressorts montés sur une surface périphérique latérale et l'autre surface périphérique latérale du corps (61) et ayant le trou (671') de fixation formé pour insérer le système (661) de fixation de la barre (66) de fixation dans celui-ci et le système (671) de fixation de rouleau fixé au trou (662) de fixation de la barre (66) de fixation.

9. Pare-soleil à commande électrique pour un véhicule selon la revendication 1, dans lequel la partie (70) d'écran comprend :
l'écran (71) d'ombrage comme un corps adapté à être enroulé sur la surface périphérique extérieure du corps (61) de la partie (60) de maintien de tension de manière à être rétracté ou développé dans/de l'intérieur et l'extérieur du corps (61) ;
la barre (72) de support montée sur la partie inférieure du corps (71) pour empêcher que l'écran (71) d'ombrage ne glisse ou ne se froisse lors du développement de l'écran (71) d'ombrage ; et
les couvre-barres (73) de support couplés aux deux surfaces latérales de la barre (72) de support, chacun ayant le trou (731) de fixation de liaison fixé pour correspondre au deuxième trou (53) de fixation de la liaison (50) comme la partie pliante et des trous (832) de fixation de barre de support formés sur la surface intérieure et latérale de celui-ci de manière à être fixé aux deux surfaces latérales de la barre (72) de support.

10. Pare-soleil à commande électrique pour un véhicule selon la revendication 1, dans lequel chaque couvre-base (80) comprend :
le corps (81) couplé aux trous (14) de montage de recouvrement formés sur les deux surfaces latérales du cadre (10) de montage pour empêcher que chaque partie (20) à (70) n'échappe sur l'extérieur et pour améliorer l'aspect extérieur du pare-soleil (100) ;
le trou (82) d'insertion formé dans l'intérieur du corps (81) pour insérer la partie (214) de surface arrière du corps (211) de l'actionneur (21) sur laquelle le carter (22) d'engrenages est déposé dans l'état de montage du fil (23) pour engrenages, de la vis sans fin (24) et de la roue hélicoïdale (25) de la partie (20) de transmission d'énergie dans celui-ci ; et
les trous (83) de fixation formés sur les deux surfaces latérales du corps (81) pour correspondre aux trous (15) de fixation du cadre (10) de montage de manière à permettre que le couvre-base (80) et le cadre (10) de montage soient fixés par l'intermédiaire de systèmes de fixation à la carrosserie de véhicule disposés au-dessus de la vitre de face avant ou de la vitre de face arrière à l'intérieur du véhicule devant ou derrière le siège de conducteur ou le siège de passager dans l'intérieur du véhicule.

11. Pare-soleil à commande électrique pour un véhicule selon la revendication 1, dans lequel le nombre de pare-soleil à commande électrique n'est pas multiple, mais unique.

12. Pare-soleil à commande électrique pour un véhicule selon l'une quelconque de la revendication 1 ou 7, dans lequel la partie (60) de maintien de tension comprend en outre une étoffe non tissée (68) montée sur la surface périphérique extérieure du deuxième tube (64') de prévention de bruit.
